# EUROPEAN PATENT SPECIFICATION

(11) **EP 0 487 087 B1**
(45) Date of publication and mention of the grant of the patent: **19.03.1997**
(21) Application number: 91119879.4
(22) Date of filing: 21.11.1991
(51) Int. Cl.: F02M 41/12, F02D 1/18

(54) **Device for controlling the fuel injection timing in a diesel engine**
Gerät zum Steuern des Kraftstoffeinspritzzeitpunktes eines Diesel-Motors
Dispositif de commande de l'injection de combustible pour moteur diesel

(30) Priority: 23.11.1990 JP 320364/90
(43) Date of publication of application: 27.05.1992
(73) Proprietor: TOYOTA JIDOSHA KABUSHIKI KAISHA, Aichi-ken (JP)
(72) Inventor: Hisatomi, Shigetaka, c/o Toyota Jidosha K. K., Toyota-shi, Aichi-ken (JP)
(74) Representative: Tiedtke, Harro, Dipl.-Ing.

(56) References cited:
- EP-A- 0 305 716
- DE-A- 3 928 219
- GB-A- 2 017 350
- GB-A- 2 057 165
- GB-A- 2 099 612
- GB-A- 2 188 755

## Description

The present invention relates to a fuel injection timing control device according to the preamble of claim 1.

Some diesel engines for vehicles are provided with an automatic timer to control the fuel-supply start timing of a fuel injection pump based on the operational state of the engine.

A generic fuel injection timing control device for a diesel engine is disclosed in the document GB-A-2 017 350. This known device comprises a cylinder disposed in a fuel injection pump and having an interior divided into a high pressure chamber and a low pressure chamber by a timer piston, wherein both chambers communicate at least indirectly with the outlet of a force fuel feed pump. The low pressure chamber (22) also communicates with the admission of a fuel pump. A cam plate is placed opposite to a roller ring interlocked with the timer piston and a plunger is coupled to the cam plate for controlling a fuel injection timing. The device further comprises a first communication path for permitting at least indirect communication between the low pressure chamber and the outlet of the fuel pump, the first path bypassing the high pressure chamber whereby said high and low pressure chambers on both sides of the timer piston communicate only via injection pump housing communicating with the outlet of the fuel pump. Further, first pressure damping means are provided in a third communication path permitting at least indirect communication between high pessure chamber and the outlet of the fuel pump and second pressure damping means are provided in a second communication path communicating the low pressure chamber with the low pressure sink.

According to the document DE-A-3 928 219, there is disclosed a fuel injection timing control device for a diesel engine comprising a solenoid-controlled valve in the path communicating a low pressure chamber with the outlet of the fuel feed pump and a controller (13) directing a duty ratio of the control signal based on the operational status of the engine.

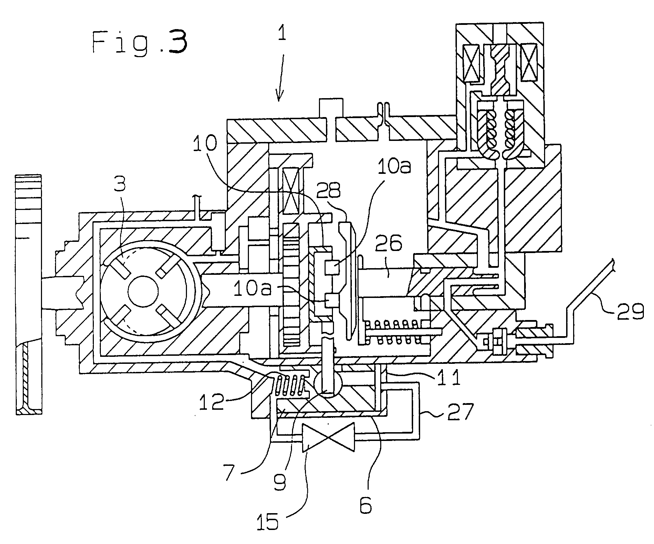

For example, Japanese Unexamined Patent Publication No. 59-105942 discloses another control device of this type. This control device includes a cylinder 6 and a timer piston provided reciprocatable and slidable in the cylinder 6, as shown in Fig. 3. The internal space of the cylinder 6 is divided by the timer piston 7. The left space is a low pressure chamber 12 which communicates with the intake of a feed pump 3, while the right space is a high pressure chamber 11 which communicates with the outlet of the feed pump 3 to introduce pressurized fuel. A solenoid-controlled timer control valve (TCV) 15 is provided in a pipe 27 through which the low pressure chamber 12 communicates with the high pressure chamber 11.

The operational status of the engine, including such factors as the engine speed and engine load, is detected by sensors and sent to a controller. The controller opens or closes the TCV 15 in accordance with a duty ratio that is selected on the basis of the operational status of the engine. As used herein, the term duty ratio is intended to reflect the percentage of the time that the valve is to be opened. For example, a duty ratio of 10% suggests that the valve is open 10% of the time, etc..

By controlling the fuel pressure in the high pressure chamber 11, the position of the timer piston 7 can be controlled. The timer piston 7 regulates the position of a roller ring 10, which in turn controls the timing of the fuel injection. Specifically, when the cam surfaces engage the rollers 10a of the roller ring 10, the cam plate actuates the piston 26 (moving it to the right as seen in Fig. 3) to cause fuel injection. Thus, the position of the roller ring effectively controls the injection timing.

In this fuel injection timing controlling device, the low pressure chamber 12 and the high pressure chamber 11 communicate with each other when the TCV 15 is open. The fuel is therefore permitted to flow between the chambers. Additionally, the timer piston 7 is shiftable. If the opening timing of the TCV 15 coincides with the timing of the plunger 26 shifting to the right, (i.e., the timing of the cam surfaces engaging the rollers 10a of the roller ring 10), a reaction force acts on the roller ring 10 to rotate the roller ring 10 counterclockwise. Thus, the reaction force causes the roller ring 10 to rotate irregularly, which in turn moves the timer piston 7 towards the high pressure chamber 11. The pressure in the high pressure chamber 11 therefore escapes via the pipe 27 to the low pressure chamber 12 to push the timer piston 7 rightward, thus further effecting the roller ring position and thus the fuel injection timing. This negative feedback may make it difficult to provide steady injection timing control.

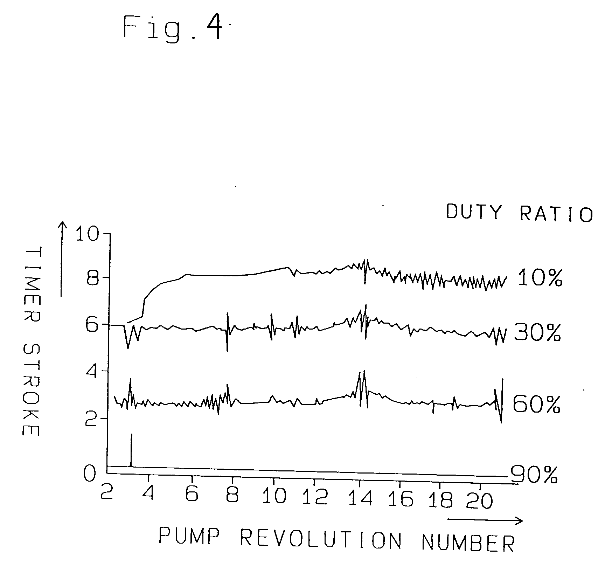

Fig. 4 is a graph showing the characteristic of a timer mechanism when the TCV energizing timing is controlled with selected duty ratios of 10%, 30%, 60% and 90% respectively. It is apparent from this graph that there are unstable fluctuations in the curves for the individual duty ratios. Note that the graph show the timer stroke S (stroke of the timer piston 7) with respect to the rotational speed of the pump, N. In other words, it is obvious that the injection timing control is fluctuating and unstable.

It is therefore an object of the present invention to provide a fuel injection timing control device in a diesel engine, for ensuring stable injection timing control.

This object is achieved by means of the combination of the features defined in claim 1. Preferable embodiments of the invention are recited in the subclaims.

With the structure according to the invention, the low pressure chamber and the high pressure chamber do not communicate with each other and a pressure fluctuations in both chambers can be suppressed. The resultant movement of the timer piston does not shift irregularly by the reaction force acting on the roller ring. This prevents the injection timing from undesirably shifting.

In accordance with the duty ratio selected on the basis of the operational status of the engine, a controller controls the opening of a solenoid-controlled valve which is placed in the first communication path between the low pressure chamber and the outlet of the force fuel feed pump. Pressure is then supplied to the low chamber. Since the timer piston is properly positioned according to the operational status of the engine, the fuel injection timing is surely controlled with high accuracy.

In the following the invention is further illustrated by an embodyment with reference to the enclosed figures.
Fig. 1 is a cross section of the structure of a fuel injection timing control device according to an embodiment of the present invention;
Fig. 2 is a graph representing the characteristic of the fuel injection timing control device according to the embodiment. The graph plots the timer stroke S (stroke of the timer piston) with respect to the pump's rotational speed N when a timer control valve is controlled with duty ratios of 10%, 30%, 60% and 90%;
Fig. 3 is a cross section of the structure of a conventional fuel injection timing control device; and
Fig. 4 is a graph representing the characteristic of the conventional fuel injection timing control device. The graph plots the timer stroke S (stroke of the timer piston) with respect to the pump's rotational speed N when a timer control valve is controlled with duty ratios of 10%, 30%, 60% and 90%.

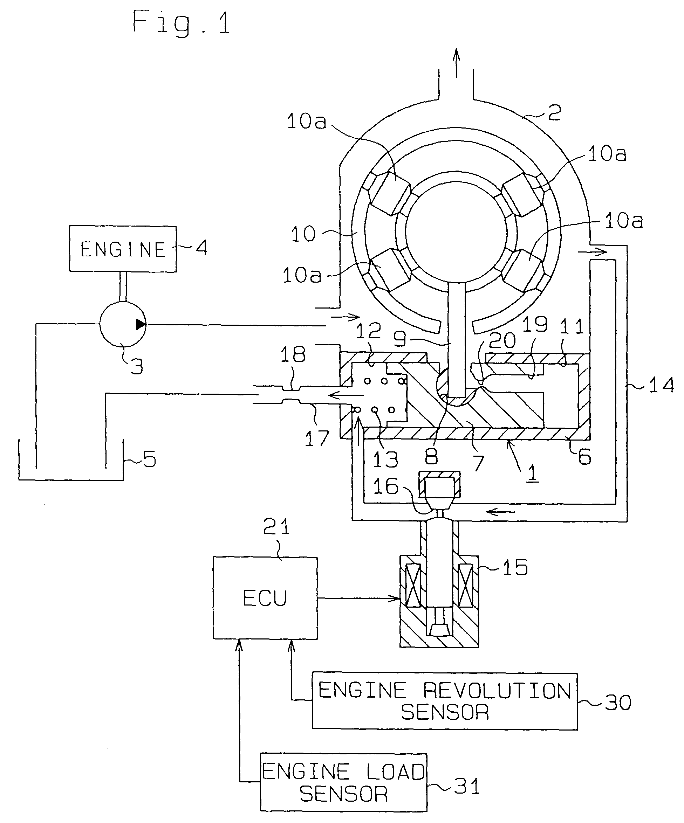

Fig. 1 illustrates the structure of the fuel injection timing control device (timer unit) 1. The timer unit 1 is placed in the lower portion of a pump housing 2 which constitutes a fuel injection pump. The pump housing 2 communicates with the outlet of a feed pump 3 which is also part of the fuel injection pump. The feed pump 3 is driven by the engine 4. The feed pump sucks fuel from a low pressure sink (i.e. fuel tank) 5 and delivers it to the pump housing 2 under a pressure proportional to the rotational speed of the engine 4.

The timer unit 1 includes a cylinder 6, whose upper portion can communicate with the pump housing 2. A timer piston 7 is held reciprocally in the cylinder 6. A recess 8 is formed in the upper center portion of the timer piston 7. The bottom end of a slide pin 9 is inserted rotatable in the recess 8. The top end of the slide pin 9 is coupled to a well-known roller ring 10 which is provided in the pump housing 2.

When the timer piston 7 reciprocates, the top end of the slide pin 9 swings accordingly to rotate the roller ring 10. As described above, this changes the timing at which the cams surfaces on the cam plate (not shown) contact individual rollers 10a, and thereby alters the timing of the plunger (also not shown). In other words, the injection timing of the fuel injection pump is changed. When the roller ring 10 is rotated clockwise, the injection timing of the fuel pump leads. When the roller ring 10 is rotated counterclockwise, the injection timing lags.

The interior of the cylinder 6 is divided into a high pressure chamber 11 and a low pressure chamber 12 by the timer piston 7. The high pressure chamber 11 receives a torque reaction force which acts on the roller ring 10, via the slide pin 9 and the timer piston 7. A timer spring 13 is provided on the end surface of the piston 7 on the side of the low pressure chamber 12, to counteract the fluid pressure which is exerted against the high pressure side of the piston 7.

The low pressure chamber 12 and the pump housing 2 communicate with each other through a first communication path 14. Since the pump housing is in communication with the outlet of the feed pump 3, the low pressure chamber 12 thus indirectly communicates with the outlet of the feed pump 3. A solenoid-controlled valve serving as a timer control valve (TCV) 15 is placed in the first communication path 14. The TCV 15 is opened and closed to control the injection timing of the fuel injection pump. Thus, the pressure in the low pressure chamber 12 is adjusted by operation of the TCV.

The TCV's duty control is performed by an electronic control unit (ECU) 21 so that the TCV 15 is opened or closed depending on the operational status of the engine 4. The ECU 21 supplies a control signal to the TCV 15 based on signals sent from an engine speed sensor 30, an engine load sensor 31, etc. According to this embodiment, the TCV 15 is controlled in such a way that a valve hole 16 opens when the ECU 21 transmits an ON command, and is closed by an OFF command. If the control signal from the ECU 21 has a large duty ratio, the duration of the ON signal becomes long. If the control signal has a small duty ratio, on the contrary, the duration of an OFF signal is long.

The low pressure chamber 12 and the fuel tank 5 communicate via a second communication path 17. The low pressure chamber 12 thus communicates with a low pressure sink. It is noted that the fuel tank 5 is at substantially the same pressure as the intake of the feed pump 3. The second communication path 17 has a second choke 18 provided therein. The cross-sectional area of the second choke 18 is selected to be almost a half of the largest cross-sectional area of the valve hole 16 of the TCV 15.

If the valve hole 16 of the TCV 15 is fully opened, the fuel pressure flowing in the low pressure chamber 12 from the pump housing 2 partially escapes through the second choke 18 toward the fuel tank 5. The pressure in the low pressure chamber 12 is set to be approximately 80% of the pressure in the pump housing 2.

A third communication path 19 is formed in the timer piston 7 between the high pressure chamber 11 and the pump housing 2. The high pressure chamber 11 therefore also communicates indirectly with the outlet of the feed pump 3. A first choke 20 is placed in the third communication path 19. The cross sectional area of the first choke 20 is the same or slightly smaller than the second choke 18.

The operation of the timer unit 1 with the above-described structure will now be explained.

When the feed pump 3 is driven interlocking with the rotation of the engine 4, the fuel is forcibly fed from the feed pump 3 to the pump housing 2. The pressure rises in the housing 2. So does the pressure in the high pressure chamber 11 via the third communication path 19, making the pressure in the pump housing 2 equal to that in the high pressure chamber 11.

The ECU 21 outputs a control signal based on the signals from the engine revolution sensor 30 and the engine load sensor 31, for example. If the TCV 15 is opened or closed with a large duty ratio in response to the control signal, the flow rate of the fuel which is supplied from the pump housing 2 via the first communication path 14 to the low pressure chamber 12 increases. Since the second choke 18 restricts the fuel from flowing back to the fuel tank 5 from the low pressure chamber 12, the amount of such fuel does not increase so much. The pressure in the low pressure chamber 12 therefore rises, and the timer piston 7 is pushed toward the high pressure chamber 11 by the pressure rise in the low pressure chamber 12 and the urging force of the timer spring 13.

The roller ring 10 is then rotated counterclockwise by the slide pin 9. This causes a change in the timing where the cam surfaces engage the individual rollers 10a, i.e., the timing at which the plunger shifts. The injection timing of the fuel injection pump is therefore delayed.

If the TCV 15 is controlled with a small duty ratio in accordance with the control signal from the ECU 21, the flow rate of the fuel, which is supplied from the pump housing 2 via the first communication path 14 to the low pressure chamber 12, decreases. As a result, the pressure in the low pressure chamber 12 drops, and the timer piston 7 is pushed toward the low pressure chamber 12 against the urging force of the timer spring 13.

As a result, the roller ring 10 is rotated clockwise by the slide pin 9, and the timing of the plunger shifting is altered. The injection timing of the fuel injection pump is therefore controlled to lead.

As described above, with the use of the timer unit 1 according to this embodiment, the injection timing of the fuel injection pump can be properly controlled by controlling the opening and closing of the TCV 15. According to this timer unit 1, the pressure in the low pressure chamber 12 is equal to the pressure at the intake of the feed pump 3 when the valve hole 16 of the TCV 15 is fully closed. Further, with the valve 16 fully opened, the pressure in the low pressure chamber 12 can rise to about 80% of the internal pressure of the pump housing 2. Therefore, the pressure of the low pressure chamber 12, i.e., the fuel injection timing can arbitrarily be adjusted over a wide range of fuel pressures.

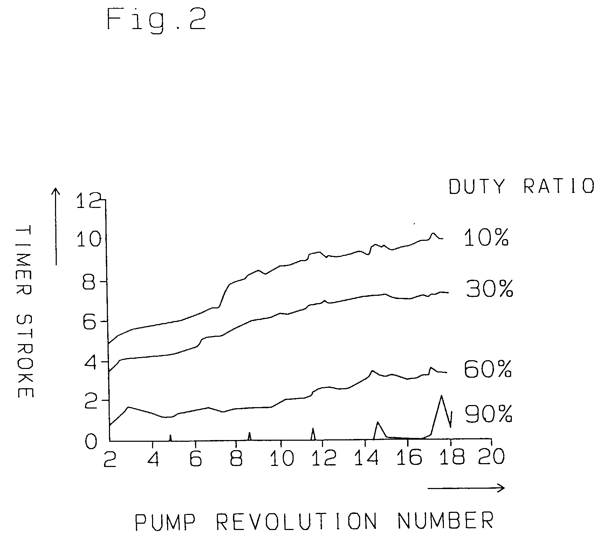

Fig. 2 is a graph representing the characteristic of the timer unit 1 according to the first embodiment, i.e., a change in timer stroke S (stroke of the timer piston 7) with respect to pump revolutions N when the TCV 15 is controlled with duty ratios of 10%, 30%, 60% and 90%. As apparent from the graph, the timer stroke S proportional to the pump revolutions N can be obtained for each duty ratio, ensuring sufficient control of the injection timing.

If the timing of the TCV 15 opening coincides with the timing of the plunger shifting right, i.e., the timing where the cam surface moves on each roller 10a of the roller ring 10, the reaction force acting on the roller ring 10 also acts on the timer piston 7 via the slide pin 9 to rotate the roller ring 10.

As described above, the high pressure chamber 11 and the low pressure chamber 12 communicate with the pump housing 2 via the third and first communication paths 19 and 14, respectively. Thus, each chamber 11, 12 is effectively and independently influenced by the outlet pressure of the feed pump 3. That is, they damp the transmission of pressure fluctuations to the high pressure chamber 11 and the low pressure chamber 12 respectively. Thus, the pressure fluctuation from the high pressure chamber 11 is not transmitted to the low pressure chamber 12 even if the aforementioned reaction force acts on the timer piston 7 when the TCV 15 is open. The timer piston 7 is therefore held at the desired position by the internal pressures of the high pressure chamber 11 and the low pressure chamber 12. It is therefore possible to more effectively prevent the timer piston 7 from shifting.

Fluctuation in pressure in the low pressure chamber 12 is most of the times less than that in the high pressure chamber 11. If the cross-sectional area of the valve hole 16 of the TCV 15 slightly changes, the timer piston 7 will not suddenly shift by the reaction force. It is ensured that the timer piston 7 is positioned steadily, and the roller ring 10 does not rotate unnecessarily. It is therefore possible to prevent shifting of or variation in the injection timing due to the reaction force, thereby ensuring stable control of injection timing.

When the plunger returns to the original position after the injection procedure, the pressure in the low pressure chamber 12 is held at a predetermined value by the choke 18, so that the timer piston 7 returns to the proper position for the next cycle. The highly accurate control of the fuel injection timing can be realized accordingly.

As is apparent from the graph in Fig. 2, unstable fluctuation such as hunting can scarcely be seen on any of the respective duty ratio curves. This ensures that the injection timing can be controlled relatively stably.

## Claims

1. A fuel injection timing control device for a diesel engine comprising a cylinder (6) disposed in a fuel injection pump (1) and having an interior divided into a high pressure chamber (11) and a low pressure chamber (12) by a timer piston (7), both the high pressure chamber (11) and the low pressure chamber (12) communicating at least indirectly with the outlet of a force fuel feed pump (3), the low pressure chamber (12) also communicating with a low pressure sink (5), a cam plate (28) placed opposite to a roller ring (10), the roller ring (10) interlocking with the timer piston (7), and a plunger (26), coupled to the cam plate (28), for controlling a fuel injection timing according to a change in position of the rolling ring (10), said device further comprising:
a first communication path (14) for permitting at least indirect communication between the low pressure chamber (12) and the outlet of the force fuel feed pump (3), the first communication path (14) bypassing the high pressure chamber (11), wherein said high and low pressure chambers (11, 12) on both sides of the timer piston (7) communicate only via fuel injection pump housing (2) said housing communicating with the outlet of the fuel feed pump (3);
a first pressure damping means (20) provided in a third communication path (19) for permitting at least indirect communication between said high pressure chamber (11) and the outlet of the force fuel feed pump (3); and
a second pressure damping means (18) provided in a second communication path (17) communicating said low pressure chamber (12) with said low pressure sink (5);
**characterized by**
a solenoid-controlled valve (15), disposed in the first communication path (14), for regulating the pressure fluctuations of the low pressure chamber (12), said solenoid-controlled valve (15) being disposed to intercept the fluid flow to the low pressure chamber (12) when the injection timing is to be advanced; and a controller (21) for controlling an opening of the valve (15), said controller (21) directing a duty ratio of the control signal based on the operational status of said engine (4), wherein
said second pressure damping means (18) is a choke having a cross-sectional area that is approximately a half of the area of the fully opened valve (15).

2. A fuel injection timing control device according to claim 1, wherein said first pressure damping means (20) is a choke.

3. A fuel injection timing control device according to claim 2, wherein the cross sectional area of the first pressure damping means (20) is substantially equal to or smaller than that of the second pressure damping means (18).

## Patentansprüche

1. Vorrichtung zum Steuern des Kraftstoffeinspritzzeitpunktes für einen Dieselmotor, der folgende Bauteile aufweist: einen in einer Kraftstoffeinspritzpumpe (1) angeordneten Zylinder (6), dessen Inneres in eine Hochdruckkammer (11) und eine Niederdruckkammer (12) durch einen Zeitsteuerungskolben (7) geteilt ist, wobei sowohl die Hochdruckkammer (11) als auch die Niederdruckkammer (12) zumindest indirekt mit dem Auslaß einer Zwangskraftstofförderpumpe (3) in Verbindung stehen, wobei die Niederdruckkammer (12) auch mit einem Niederdruckbecken (5) in Verbindung steht, eine Hubscheibe (28), die gegenüberliegend zu einem Rollenring (10) angeordnet ist, wobei der Rollenring (10) mit dem Zeitsteuerungskolben (7) verblockt ist, und einen Tauchkolben (26), der zur Steuerung eines Kraftstoffeinspritzzeitpunkts gemäß einer Änderung der Position des Rollenrings (10) mit der Hubscheibe (28) gekoppelt ist, wobei die Vorrichtung weiterhin aufweist:
einen ersten Verbindungspfad (14), der zumindest eine indirekte Verbindung zwischen der Niederdruckkammer (12) und dem Auslaß der Zwangskraftstofförderpumpe (3) ermöglicht, wobei der erste Verbindungspfad (14) die Hochdruckkammer (11) umgeht, wobei die Hoch- und Niederdruckkammer (11, 12) an beiden Seiten des Zeitsteuerungskolbens (7) nur über ein Kraftstoffeinspritzpumpengehäuse (2) in Verbindung stehen, wobei das Gehäuse mit dem Auslaß der Kraftstofförderpumpe (3) in Verbindung steht;
eine erste Druckdämpfungseinrichtung (20), die in einem dritten Verbindungspfad (19) vorgesehen ist, um zumindest eine indirekte Verbindung zwischen der Hochdruckkammer (11) und dem Auslaß der Zwangskraftstofförderpumpe (3) zu ermöglichen; und
eine zweite Druckdämpfungseinrichtung (18), die in einem zweiten Verbindungspfad (17) vorgesehen ist, der die Niederdruckkammer (12) mit dem Niederdruckbecken (5) verbindet;
**gekennzeichnet durch**
ein elektromagnetisch gesteuertes Ventil (15), das zur Regelung der Druckschwankungen der Niederdruckkammer (12) in dem ersten Verbindungspfad (14) angeordnet ist, wobei das elektromagnetisch gesteuerte Ventil (15) angeordnet ist, um den Fluidfluß zu der Niederdruckkammer (12) anzuhalten, wenn der Einspritzzeitpunkt vorverlegt werden soll; und einen Regler (21) zum Steuern des Öffnens des Ventils (15), wobei der Regler (21) ein Einschaltdauerverhältnis des Steuersignals auf der Grundlage des Betriebszustand des Motors einrichtet, wobei
die zweite Druckdämpfungseinrichtung (18) eine Drossel ist, die eine Querschnittsfläche hat, die ungefähr der halben Fläche des vollkommen geöffneten Ventils (15) entspricht.

2. Vorrichtung zum Steuern des Kraftstoffeinspritzzeitpunktes nach Anspruch 1, wobei die erste Druckdämpfungseinrichtung (20) eine Drossel ist.

3. Vorrichtung zum Steuern des Kraftstoffeinspritzzeitpunktes nach Anspruch 2, wobei die Querschnittsfläche der ersten Druckdämpfungseinrichtung (20) im wesentlichen gleich oder kleiner als die der zweiten Druckdämpfungseinrichtung (18) ist.

## Revendications

1. Un dispositif de contrôle de l'instant d'injection de carburant pour un moteur Diesel, comprenant un cylindre (6) disposé dans une pompe d'injection de carburant (1) et dont l'intérieur est divisé en une chambre à haute pression (11) et en une chambre à basse pression (12) par un piston de contrôle (7) de l'instant d'injection, la chambre à haute pression (11) ainsi que la chambre à basse pression (12) communiquant au moins indirectement avec la sortie d'une pompe (3) d'alimentation en carburant par refoulement, la chambre à basse pression (12) communiquant également avec une bâche à basse pression (5), un plateau de came (28) placé en face d'une bague à rouleaux (10), la bague à rouleaux (10) étant reliée mécaniquement avec le piston de contrôle d'instant d'injection (7), et un piston plongeur (26) couplé au plateau de came (28), pour contrôler l'instant d'injection de carburant, en fonction d'un changement de position de la bague à rouleau (10), ledit dispositif comprenant en outre :
- un premier passage de communication (14) pour permettre au moins la communication indirecte entre la chambre à basse pression (12) et la sortie de la pompe d'alimentation en carburant par refoulement (3), le premier passage de communication (14) constituant une dérivation pour la chambre à haute pression (11), dans lequel lesdites chambres à haute et à basse pression (11, 12) des deux côtés du piston de contrôle d'instant d'injection (7) communiquent uniquement via un boîtier de pompe d'injection de carburant (2), ledit boîtier communiquant avec la sortie de la pompe d'alimentation en carburant (3) ;
- des premiers moyens d'amortissement de pression (20) prévus dans un troisième passage de communication (19) pour permettre au moins une communication indirecte entre ladite chambre à haute pression (11) et la sortie de la pompe d'alimentation en carburant par refoulement (3) ; et
- des deuxièmes moyens d'amortissement de pression (18) prévus dans un deuxième passage de communication (17) reliant ladite chambre à basse pression (12) à ladite bâche à basse pression (5) ;
caractérisé par
- une électrovalve à commande par solénoïde (15), disposée dans le premier passage de communication (14), pour réguler les fluctuations de pression de la chambre à basse pression (12), ladite électrovalve à commande par solénoïde (15) étant disposée pour intercepter l'écoulement de fluide vers la chambre à basse pression (12) lorsque l'instant d'injection doit être avancé ; et un organe de commande (21) pour commander l'ouverture de la valve (15), ledit organe de commande (21) contrôlant le taux de présence du signal de commande en fonction des conditions de fonctionnement dudit moteur (4),
- lesdits deuxièmes moyens d'amortissement de pression (18) étant constitués par un étranglement dont la surface de section transversale est d'approximativement la moitié de la surface de la valve (15) complètement ouverte.

2. Un dispositif de contrôle de l'instant d'injection de carburant selon la revendication 1, dans lequel lesdits premiers moyens d'amortissement de pression (20) sont constitués par un étranglement.

3. Un dispositif de contrôle de l'instant d'injection de carburant selon la revendication 2, dans lequel la surface de section transversale des premiers moyens d'amortissement de pression (20) est sensiblement égale ou inférieure à celle des seconds moyens d'amortissement de pression (14).
